# EUROPEAN PATENT APPLICATION

(11) **EP 4 607 825 A1**
(43) Date of publication of application: **27.08.2025**
(21) Application number: 24159126.2
(22) Date of filing: 22.02.2024
(51) Int. Cl.: H04B 10/70

(54) **SYSTEM AND METHOD FOR A TWO-STEP QUANTUM SECURE DIRECT COMMUNICATION**

(71) Applicant: Q.ant GmbH, 70565 Stuttgart (DE)
(72) Inventor: Chen, Xing, 71634 Ludwigsburg (DE)
(74) Representative: Trumpf Patentabteilung

(57) **Abstract**

The invention relates to a system (10) for a two-step quantum secure direct communication, the system (10) comprising:
- a transmitter client (12) to transmit an information,
- a receiver client (14) to receive the information transmitted by the transmitter client (12),
- at least one communication path (16) between the transmitter client (12) and the receiver client (14) to direct the information, and
- a light source (34) to emit two single-mode squeezed state lights;

the transmitter client (12) comprising:
- a modulator arrangement (44) to create at least two modes of a two-mode squeezed state light from the two single-mode squeezed state lights, and
- at least one transmitter-sided detector (20) to measure at least one mode of the two-mode squeezed state light,

the receiver client (14) comprising:
- at least one receiver-sided detector (22, 24) to measure at least one mode of the two-mode squeezed state light, wherein the modulator arrangement (44) and/or at least one of the detectors (20, 22, 24) is embedded in a photonic integrated circuit (38).

## Description

The invention relates to a system and a method for a two-step quantum secure direct communication.

Quantum communication represents a significant development in the field of secure data exchange, extending beyond the capabilities of traditional communication methods. A central aspect to this technical field is the use of quantum states and phenomena, such as entanglement and superposition, which inherently enhance security based on quantum physics principles. Quantum Secure Direct Communication (QSDC), a branch of quantum communication, facilitates the direct transfer of information between clients, eliminating the requirement for an initial key exchange, a process necessary in Quantum Key Distribution (QKD). This approach contributes to a higher level of security and data transmission efficiency. QSDC provides a communication secure against unauthorized interception and eavesdropping. Differing from conventional QKD systems, it enables direct information transfer, streamlining the communication process and potentially lowering the risk of security breaches during key exchange. The system is engineered to optimize data transmission efficiency, aiming to reduce latency and increase throughput relative to standard quantum communication methods. These quantum communication systems are applied in technical fields, for instance, like national security, banking, and information technology.

The object of the invention is to provide a fast, secure, resilient and miniaturized quantum communication.

The object of the invention is solved by a system for a two-step quantum secure direct communication comprising the features of claim 1. The system comprises a transmitter client and a receiver client, wherein the transmitter client transmits an information to the receiver client. The information is directed between the transmitter client and the receiver client via at least one communication path. The system further comprises a light source to emit two single-mode squeezed state lights, wherein the light source may comprise two ring resonators. The light source generates preferably coherent light, which is then converted in the resonators, specifically ring resonators, into two single-mode squeezed state lights. The transmitter client comprises a modulator arrangement to create two modes of a two-mode squeezed state light from the two single-mode squeezed state lights. It is also conceivable that the two-mode squeezed state light is designed as a multi-mode squeezed state light. The transmitter client comprises a transmitter-sided detector to measure one mode of the two-mode squeezed state light and the receiver client comprises a receiver-sided detector to measure one mode of the two-mode squeezed state light. By measurement of one mode of the two-mode squeezed state light, the receiver client can extract the information from the mode. The modulator arrangement and/or at least one of the detectors, for instance the transmitter-sided detector and/or the receiver-sided detector, is embedded in a photonic integrated circuit, for example a Lithium Niobate on Insulator chip (LNOI chip) or a Silicon Niobate on Insulator chip.

A LNOI chip is described below as an example, wherein other photonic integrated circuits, such as SNOI chips, also function according to the same or comparable principles. A LNOI chip has a sandwich structure comprising a thin layer of lithium niobate, in particular LiNbO₃, on an insulating substrate, for instance like silicon dioxide. The lithium niobate is a crystalline material with special electro-optical, piezoelectric, and non-linear optical properties. The lithium niobate layer is designed to provide optical components, e.g. optical waveguides, which are created through advanced microfabrication techniques such as photolithography, etching or ion exchange processes. These waveguides act as conduits for light providing a high precision and speed of directing and manipulating the light. The LNOI chip enables the manipulation of light properties via the electro-optic effect by application of electrodes. When an electric field is applied to the lithium niobate layer, it induces a change in the refractive index of the lithium niobate, allowing for dynamic control over the phase, intensity, and polarization of light passing through the waveguides.

The embedment of the modular arrangement and/or the at least one detector on an LNOI chip provides a faster, more secure, more resilient and miniaturized system for quantum communication. The LNOI chip ensures a low error rate due to the precise directing and manipulation of the lights, in contrast to the state of the art, where the directing of light is carried out exclusively using free space or fiber.

It is preferably that the modulator arrangement and the transmitter-sided detector are embedded in a shared photonic integrated circuit, preferably in a shared LNOI chip or in a shared SNOI chip. This will further promote the miniaturization of the system and the reliability of directing lights inside the photonic integrated circuit.

It is more preferably that the modulator arrangement and/or at least one of the detectors comprise at least two waveguides, especially a first waveguide and a second waveguide, each to direct at least one of the two single-mode squeezed lights and/or at least one of the two two-mode squeezed state lights, wherein the waveguides are separated in a modulation section of the waveguides. It is more preferably that the modulator arrangement and/or at least one of the detectors comprise at least one electro-optical modulator or at least one pair of electro-optical modulators to modulate at least one parameter of the single-mode squeezed state lights, wherein each modulator is arranged and/or provided at one of the modulation sections of the waveguides. Due to the pair of modulators, the properties of both lights can be precisely modulated.

The electro-optical modulators are preferably built by the photonic integrated circuit, no separate devices are necessary. Electrodes are arranged at the modulation section of each waveguide, preferably in the thin layer next to the modulation section. When a voltage is applied to these electrodes, an electric field is generated across the thin layer. Its refractive index changes in response to the applied electric field. As the light travels through the waveguide, its properties are altered in the modulation section by changing the refractive index. Depending on how the electric field is varied, different types of modulation can be achieved, e.g. phase modulation, intensity modulation and polarization modulation.

It is advantageous if the modulator arrangement is configured as an interferometer, preferably a Mach-Zehnder interferometer. By using such an interferometer, precise modulation of the lights is ensured.

It is further advantageous if the modulator arrangement further comprises at least one beam splitter to separate or combine the two single-mode squeezed state lights. The beam splitter is preferably embedded in a photonic integrated circuit, for instance in the shared photonic circuit.

The modulator arrangement is preferably preceded by a phase shifter to shift a phase of one of the single-mode squeezed state lights. The phase shifter preferably shifts one single-mode squeezed state light with a phase of n/2, so the two-mode squeezed state lights can be generated with high efficiency. Preferably the phase shifter is embedded in a photonic integrated circuit, for instance in the shared photonic circuit.

It is advantageous if at least one of the detectors, for instance the transmitter-sided detector and/or the receiver-sided detector, comprises at least one detection system, especially a homodyne detector, in particular a photo detector.

To further increase the precision of the measurement of the two-mode squeezed state lights, a first detection system, especially a first homodyne detector, in particular a first photo detector, measuring at least one mode of the two-mode squeezed state light and a local oscillation and a second detection system, especially a second homodyne detector, in particular a second photo detector, measuring at least one mode of the two-mode squeezed state light and a local oscillation. The signals were mixed by the beam splitter before. Both detectors measure a current intensity induced by photons. The quadrature of the squeezed state may be measured by comparing the results from the two detectors. The detector may be designed as a detection system, in particular a balanced homodyne detector.

It is further advantageous if the modulator arrangement is followed by an encoder to encode the information to one of the two-mode squeezed state lights. The encoder is preferably further configured in such a way, that it only encodes the secret information, if the clients agree that the communication is secure. The encoder is preferably embedded in a photonic integrated circuit, preferably in the shared photonic integrated circuit. It is conceivable that the transmitter-sided detector and the encoder are embedded in a shared photonic integrated circuit, wherein modulator arrangement is separated on the shared photonic integrated circuit.

In a preferred embodiment a mode switch is provided, that is switchable between a control mode and an operation mode. In the control mode, at least one of the modes of the two-mode squeezed state light is directed to the transmitter-sided detector. In the operation mode, at least two modes of the two-mode squeezed state light are directed to the receiver-sided detector, especially the at least one mode, that was shifted to the transmitter-sided detector in the control mode, is shifted to the receiver-sided detector in the operation mode. The mode switch is preferably embedded in the shared photonic integrated circuit. The mode switch is preferably positioned between the modulator arrangement and the encoder, especially along the waveguides. Along the waveguides after the mode switch, the second waveguide splits into a control waveguide and an operation waveguide. The control waveguide leads to the transmitter-sided detector or at least to a path directing to the transmitter-sided detector. The operation waveguide leads to the receiver-sided detector or at least to a path directing to the receiver-sided detector.

For easier implementation, at least one of the detectors, especially the transmitter-sided detector and/or the first receiver-sided detector and/or the second receiver-sided detector, is configured as a homodyne detector, preferably a balanced homodyne detector. Alternatively or additionally, at least one of the detectors is configured as a heterodyne detector.

To increase the precision of the measurements at the receiver client, the receiver client comprises at least two separate detectors, especially at least two homodyne detectors, preferably at least two balanced homodyne detectors. A first detector measures at least one mode of the two-mode squeezed state light. A second detector measures at least one mode of the two-mode squeezed state light, wherein the squeezing phase between two-modes is enhanced with the secret information by the encoder.

It is advantageous if a shared local oscillator is provided by the light source to all detectors as a reference for measuring the at least one mode of the two-mode squeezed state light.

It is further advantageous if the communication path comprises a first quantum channel to direct at least one mode of the two-mode squeezed state light and/or a second quantum channel to direct at least one other mode of the two-mode squeezed state light and/or local oscillator channel to direct the local oscillator. The communication path may comprise a single fiber or a single fiber bundle.

The light source is preferably configured as a seed laser, preferably as a 1550 nm seed laser. A seed laser provides a light with a precise wavelength and thus ensures a reliable modulation. The specific wavelength of 1550 nm is very advantageous for LNOI chips. However, different wavelengths are conceivable for different photonic integrated circuits.

A switchable fiber delay device is preferably provided in the communication path, preferably in the first quantum channel and/or the second quantum channel and/or local oscillator channel, and/or in at least one of the waveguides to realize an asynchronously detection of the two single-mode squeezed state lights. The fiber delay acts as a quantum memory. The fiber delay has the effect that the receiver client can perform a measurement and send the results to the transmitter client before the transmitter client performs their measurement in the control mode. The fiber delay has further the effect that the transmitter client can encode the secret information in the squeezing phase between two-modes before the transmitter client performs their measurement to extract the information in the operation mode.

The object of the invention is likewise solved by a method for a two-step quantum secure direct communication between a transmitter client and a receiver client comprising the features of claim 15. The method comprises the following steps:
- Sharing an agreement between both clients, the agreement defining how information is mapped to a squeezed state, wherein the agreement is preferably shared over a non-quantum channel or classical (public) channel;
- Generating at least two modes of a two-mode squeezed state light by the transmitter client, wherein the two-mode squeezed state light is preferably generated from a single-mode squeezed state light;
- Checking the security of the communication in a control mode, the control mode comprising the following steps:
   o Directing at least one first mode of the two-mode squeezed state light to the receiver client and at least one second mode of the two-mode squeezed state light to the transmitter client,
   o Measuring the at least one second mode by a transmitter-sided detector, by a randomly generated measurement sequence,
   o Sending the measurement sequence and corresponding results from the transmitter client to the receiver client,
   o Measuring the at least one first mode by a first receiver-sided detector with the measurement sequence sent by the transmitter client,
   o Comparing the measurement results of both clients with each other,
   o Determining the security of the communication in dependences on the comparison of the measurement results, especially in dependences on the degree of compliance between both measurement results;
- Switching to operation mode, if a comparison of the measurement results indicates a secure communication, the operation mode comprising the following steps:
   o Encoding the information in the at least one second mode by the transmitter client,
   o Directing the at least one first mode and the at least one second mode to the receiver client,
   o Measuring the at least one first mode by the first receiver-sided detector and the at least one second mode by a second receiver-sided detector to decode the information.

Using two receiver-sided detectors, the two-mode squeezed state light can be measured with a higher precision.

The measurement of the two-mode squeezed state light is preferably based on a position quadrature (X) measurement and/or a momentum quadrature (P) measurement.

For comparing the measurement results of both clients with each other, the transmitter client shares preferably his measurement basis (position quadrature or momentum quadrature) with the receiver client over a non-quantum channel or a classical (public) channel. The measurement basis may be randomly chosen. The transmitter client performs preferably the same measurement as the receiver client based on the measurement basis. The results, for example the quadrature value obtained by the transmitter client should be correlated or anti-correlated for position quadrature measurement and anti-correlated or correlated for momentum quadrature measurement. If there is inconsistency in the measurement results, which exceed a certain threshold, the channel is not safe for communication. If they confirmed that the channel is safe, they switch to the next step, the operation mode.

The transmitter client preferably switches the at least one first mode to encode the secret information in the squeezing phase between two-modes, by changing the squeezing phase between 0 and π. The receiver client preferably receives both modes, at least one first mode and at least one second mode. The transmitter client preferably performs a joint measurement on both modes by two separate detectors to retrieve the phase information encoded by the transmitter client. The phase information can be retrieved by the correlation in the measured quadrature at least from both single modes. Suppose the receiver client chose to measure X quadrature, when the results from the two single-modes are correlated, the message by the transmitter client is 0, if anti-correlated, the message is 1.

The measurement of the modes of the two-mode squeezed state light preferably comprises a homodyne measurement, especially a balanced homodyne measurement. The modes are preferably measured by two separate photo detectors at each detector. A local oscillator is shared between both clients, in particular the detectors.

It is advantageous if the operation mode further comprises the following steps:
- Sharing a fraction of the encoded information by the transmitter client with the receiver client through a non-quantum channel and/or a classical (public) channel,
- Comparing the fraction of the encoded information with the decoded information to determine the error rate and/or security of the communication.

During the operation mode, there could be noise or eavesdropping in the communication path. To further guarantee the security of the communication, the transmitter client preferably publicly announces a small fraction, which is similar to typical QKD protocols, of its encoded information, especially encoded phase, through the classical public channel. Then the receiver client preferably compares the fraction with its results to determine the degree of compliance. The receiver client preferably determines the error rate and privacy of the shared information depending on the degree of compliance.

On this basis, both clients can do an error correction and privacy amplification like standard QKD protocol.

It is further advantageous if the directing of the first mode and/or the second mode is delayed with a fiber delay to provide an asynchronous measurement. The fiber delay act as a quantum memory. The fiber delay has the effect that the receiver client can perform a measurement and send the results to the transmitter client before the transmitter client performs their measurement in the control mode. The fiber delay has further the effect that the transmitter client can encode the information by at least one mode of the two-mode squeezed state light before the transmitter client performs their measurement to extract the information in the operation mode.

Further details of the invention can be found in the following description, on the basis of which an embodiment of the invention is described and explained in more detail.

In the drawings shows:
- Fig. 1: a schematic overview of a system for a two-step quantum secure direct communication;
- Fig. 2: a schematic overview of a method for a two-step quantum secure direct communication;
- Fig. 3: two ways of encoding classical information into the squeezing phase of a two-mode squeezed light;
- Fig. 4: diagrams of a quadrature correlation of two modes each with 10 dB squeezing and with a squeezing phase of 0; and
- Fig. 5A-B: diagrams of a quadrature correlation and/or anti-correlation in the operation mode.

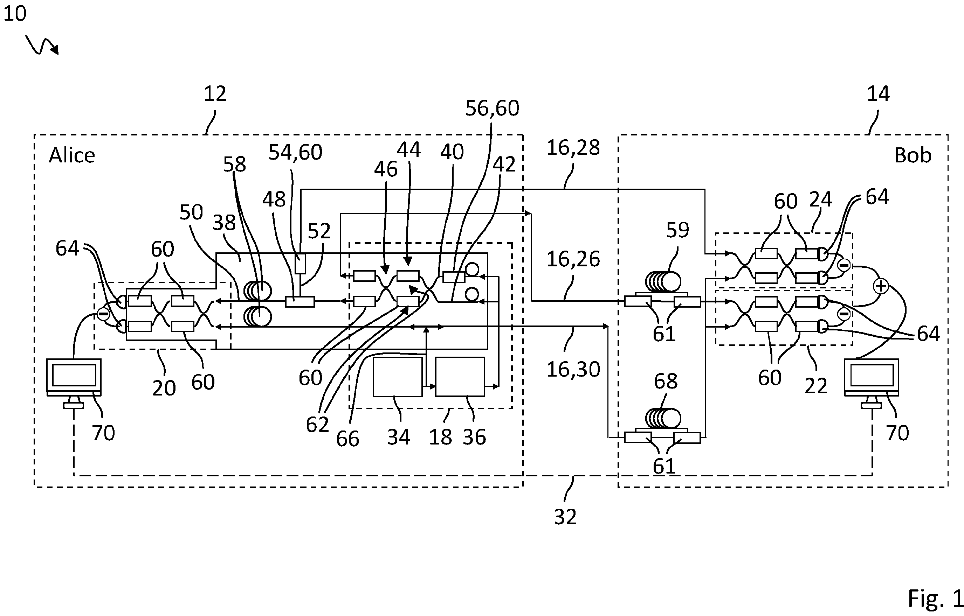

According to Fig. 1 the system 10 for a two-step quantum secure direct communication comprises a transmitter client 12, called Alice, and a receiver client 14, called Bob. The communication aims to transfer secret information, especially meaningful binary code, from the transmitter client 12 to the receiver client 14. To transfer the information a communication path 16 is established between the transmitter client 12 and the receiver client 14.

The transmitter client 12 comprises an integrated two-mode squeeze state (TMSS) source 18 to generate a two-mode squeezed state light that can be encoded with meaningful information. Further, the transmitter client 12 comprises a transmitter-sided integrated balanced homodyne detector 20 and the receiver client 14 comprises a first receiver-sided integrated balanced homodyne detector 22 and a second receiver-sided integrated balanced homodyne detector 24.

The communication path 16 comprises multiple channels in one or more fibers. The communication path 16 comprises a first quantum channel 26, a second quantum channel 28, a local oscillator channel 30 and a classical (public) channel 32.

To generate the TMSS light, the TMSS source 18 comprises a light source 34, especially a seed laser with a wavelength of 1550 nm. The light source 34 is followed by a second harmonic generator (SHG) 36, also known as frequency doubling. The SHG 36 is a physical process in which two photons of the same frequency interact in a nonlinear medium to create a single photon with twice the frequency of the original photons. This process is a special case of nonlinear optics. The combination of a seed laser 34 and SHG 36 allows the generation of laser light with a specific, higher frequency and precise wavelength control, which is important for the generation of the TMSS light. The light is directed to a beam splitter (not shown) to separate the generated light into two single-mode squeezed state lights. According to Fig. 1, the light source 34 comprises two ring resonators. The two ring resonators may be arranged at the light source 34.

The two single-mode squeezed state lights are coupled into a photonic integrated circuit (PIC) 38. The PIC 38 builds a part of the TMSS source 18. The PIC forms a first waveguide 40 and a second waveguide 42, wherein a first single-mode squeezed state light is coupled in to the first waveguide 40 and a second single-mode squeezed state light is coupled in to the second waveguide 42.

The two ring resonators of the light source 34 may be embedded into the PIC 38.

The two single-mode squeezed state lights enter a modulator arrangement 44. The modulator arrangement 44 creates a TMSS light from the two single-mode squeezed state lights. The first mode of the TMSS light or the first mode is directed into the first waveguide 40 and the second TMSS light or the second mode is directed into the second waveguide 42.

The first TMSS light is coupled out of the first waveguide 40 into the first quantum channel 26 directing to the receiver client 14. The second TMSS light passes a mode switch 48, wherein the second waveguide 42 splits into a control waveguide 50 and an operation waveguide 52 after the mode switch 48. The control waveguide 50 is directed to the transmitter-sided detector 20 and the operation waveguide 52 is directed to an encoder 54. After the encoder 54 the TMSS light leaves the operation waveguide 52 and is coupled into the second quantum channel 28 directing to the receiver client 14.

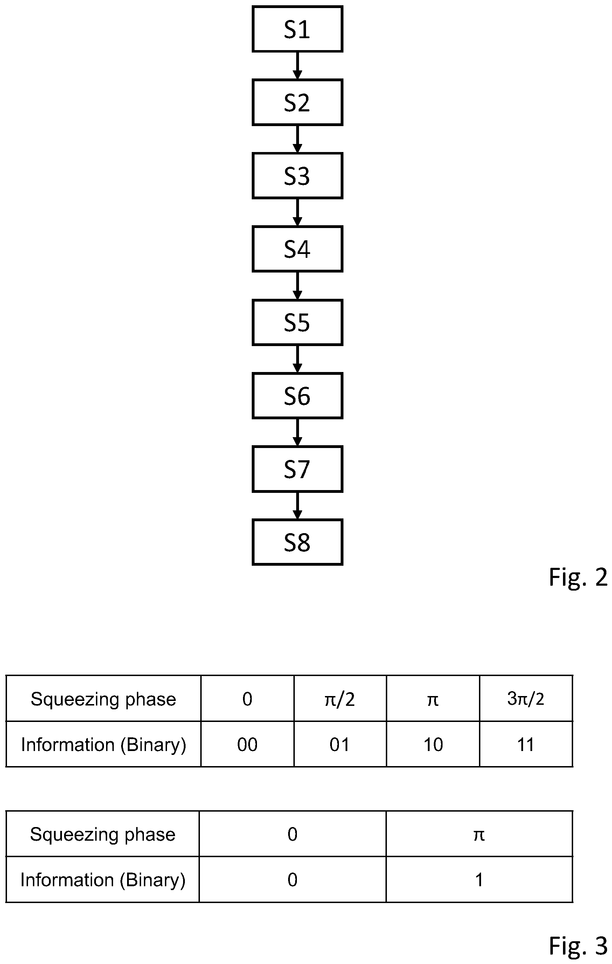

Before sharing the entangled states, the transmitter client 12 and the receiver client 14 agree on how classical information is mapped to the phase space of the TMSS light (step S1). The classical information can be encoded into the TMSS light depending on the squeezing level and the transmission rate of the system 10. Fig. 3 shows two examples how the squeezing phase of TMSS light can be mapped into binary codes. This agreement is represented by a mutual agreement that is shared between both clients on the classical channel 32.

The squeezing phase of a TMSS can range from 0 to 2π. In principle, the classical information that can be encoded is infinite. But from a practical point of view, the resolution of the Analog-to-Digital (ADC), the noise and loss in the system will drastically reduce the encodable classical information in the squeezing phase space. In the examples of Fig. 3, the resolution is either n/2 or π.

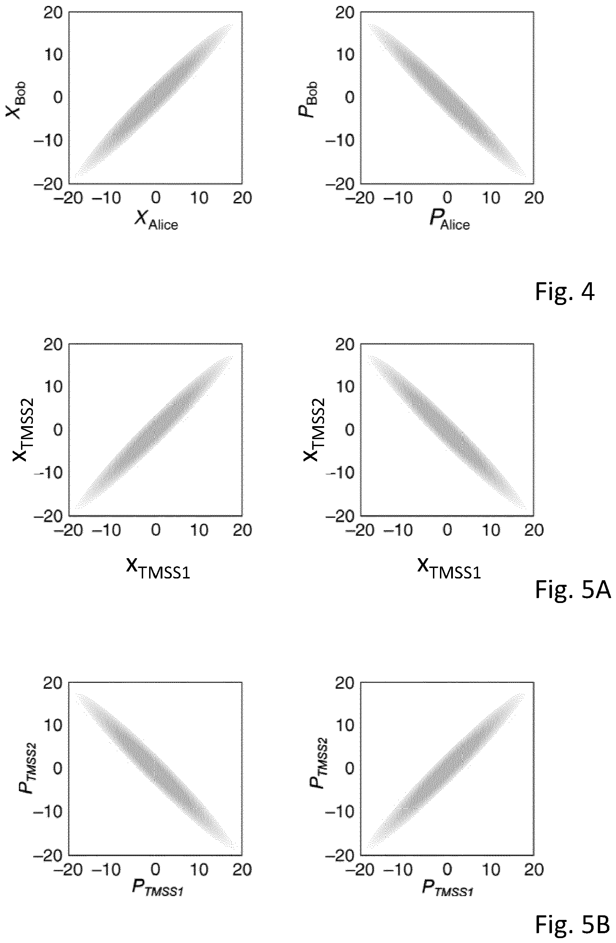

The transmitter client 12 generates a single-mode squeezed state light using the light source 34 that is enhanced with the SHG 36 (S2) and the two following ring resonators. The light is split into at least two single-mode squeezed state lights and coupled into the PIC 38, especially into the first waveguide 40 and the second waveguide 42. In the modulator arrangement 44 the at least two single-mode squeezed state lights are transformed in at least two modes of TMSS light (S3). Suppose in the TMSS, both single modes have 10 dB squeezing, then with squeezing phase of 0 their quadrature correlation will look like the one in Fig. 4. To increase the efficiency of generating TMSS light, a phase of one of the single-mode squeezed state lights is shifted using a phase shifter 56. The phase shifter 56 preferably shifts one single-mode squeezed state light in the first waveguide 40 with a phase of π/2.

Before sending relevant information through the communication path 16, both clients 12, 14 determine the security of the communication path 16 in a control mode (S4). After the generation of the TMSS light, the transmitter client 12 sends at least one mode, especially the first mode of the TMSS light, through the first quantum channel 26 to the receiver client 14 and directs at least one other mode, especially the second mode of the TMSS light, to the receiver-sided detector 20. After receiving the first mode of the TMSS light, the receiver client 14 performs a homodyne measurement using the first receiver-sided detector 22 by randomly choosing a position quadrature (X) or a momentum quadrature (P) measurement to the squeezed mode he received. For example, the transmitter client 14 could choose the measurement with a random basis like a string 0101001..., where 0 is a quadrature X measurement and 1 is a quadrature P measurement. The transmitter client 14 will get quadrature value ranges randomly for example from -20 to 20.

Then the receiver client 14 publishes his measurement basis and results through the classical channel 32. After receiving the receiver clients 14 measurement bases, the transmitter client 12 performs a homodyne measurement to his part of the TMSS, in particular the second mode of the TMSS light with the same quadrature as the receiver client 14 using the transmitter-sided detector 20.

If the communication path 16, especially the first quantum channel 26, is not eavesdropped and secure, the results of the transmitter client 12 should be correlated or anti-correlated with the result of the receiver client 14. By sharing and comparing their results through the classical channel 32, both clients 12, 14 will know whether the communication path 16 is safe for further protocol steps or not. The security of the communication path 16 depends on the degree of compliance between both measurement results. The communication path 16 can be determined as secure if the degree of compliance is greater than 80%, preferably 90%, and more preferably 95%. If the clients 12, 14 confirm that the channel is safe, they proceed to the next step of the protocol, switching to operation mode, otherwise the protocol is aborted (S5).

A first fiber delay 58 is provided in control waveguide 50 as the transmitter client 12 needs to wait the receiver client 14 to finish his measurement and send back the measurement bases and results to the transmitter client 12, so the transmitter client 12 can start her homodyne measurement. The first fiber delay 59 is preferably switchable between an on and off status by a delay switch 61.

After confirming the communication path 16 is secure, the transmitter client 12 switches the mode switch 48 from control state in operation state, so the second mode of the TMSS light is directed to the encoder 54 and not to the transmitter-sided detector 20. Using the encoder 54 the transmitter client 12 encodes her information in the squeezing phase of the TMSS light (S6). The information are encoded in the phase of the TMSS light by changing the squeezing phase between 0 and π or between 0 and π/2 and π and 3π/2. These are just two examples of encoding, wherein more resolutions that are different can be chosen. The second mode of the TMSS light is sent to the receiver client 14 through the second quantum channel 28. The second mode of the TMSS light is measured by the second receiver-sided detector 24. A second fiber delay 59 is preferably provided in the first quantum channel 26 so the receiver client 14 only measures when the transmitter client 12 completed the encoding of the quantum state before sending the second TMSS light. After receiving both modes from the TMSS light, in particular the first mode of the TMSS light and the second mode of the TMSS light, the receiver client 14 performs a joint measurement on the TMSS by his two homodyne detectors 22, 24 to retrieve the phase information encoded by the transmitter client 12, such phase information can be mapped into classical binary code taken the lower table of Fig. 3 as an example, 0 or 1 (S7). The phase information can be retrieved by the correlation in the measured quadrature. Suppose the receiver client 14 chooses to measure X-quadrature, when the results from the first mode and second mode are correlated (left figure in Fig. 5A), the message by transmitter client 12 is 0, if anti-correlation (right figure in Fig. 5A), the message is 1. And it is similar if the receiver client 14 measures the P-quadrature as shown in Fig. 5B.

A significant advantage of the system 10 and the method is that the classical channel 32 is only used to verify the security of the quantum channels 26, 28. No secure or relevant information are transmitted through the classical channel 32.

To further guarantee the security of the protocol, during the operation mode the transmitter client 12 publicly announces a fraction of her encoded phase through the classical channel 32. The fraction may be similar to typical QKD protocols. The receiver client 14 can compare the fraction with his results to see if they match, so they can decide the error rate and privacy of their shared message (S8).

The modulator arrangement 44 is embedded in the PIC 38. The modulator arrangement 44 is preferably configured as an interferometer, preferably a Mach-Zehnder interferometer. By using such an interferometer, precise modulation of the lights is ensured. The modulator arrangement 44 comprises two pairs of electro-optical modulators 60, wherein each waveguide 40, 42 passes two electro-optical modulators 60. Due to the pair of modulators 60, the properties of both lights can be precisely modulated.

The waveguides 40, 42 are separated to each other in a modulation section 62 of each waveguide 40, 42, wherein the pair of modulators 60 are arranged at the modulation sections 62.

The electro-optical modulators 60 are built by the PIC 38, so no separate devices are necessary. Electrodes (not shown) are arranged at each modulation section 62 of each waveguide 40, 42, preferably in a thin layer next to the modulation section 62. When a voltage is applied to these electrodes, an electric field is generated across the thin layer. Its refractive index changes in response to the applied electric field. As the light travels through the waveguide 40, 42, its properties are altered in the modulation section 62 by changing the refractive index. Depending on how the electric field is varied, different types of modulation can be achieved, e.g. phase modulation, intensity modulation and polarization modulation.

The phase shifter 56 and/or the beam splitter 46 and/or the mode switch 48 and/or the encoder 54 are built by such an electro-optical modulator 60. It is preferably, that the modulator arrangement 44 and/or the beam splitter 46 and/or the mode switch 48 and/or the encoder 54 and/or the phase shifter 56 are embedded in a shared PIC 38, preferably in a shared LNOI chip or in a shared SNOI chip. The PIC 38, in particular the shared LNOP chip, offers higher communication speeds than a transfer via air or fiber due to the on-chip transfer and/or on-chip modulation and/or on-chip encoding and/or on-chip beam splitting.

The transmitter-sided detector 20 and/or the first receiver-sided detector 22 and/or the second receiver-sided detector 24 are preferably built as the modulator arrangement 44.

It is more preferably, that the first receiver-sided detector 22 and/or the second receiver-sided detector 24 are each embedded in a PIC 38, preferably each in a LNOI chip or each in a SNOI chip, or in a shared PIC 38, preferably in a shared LNOI chip or in a shared SNOI chip.

The detectors 20, 22, 24 each comprise two separate photo detectors 64, wherein a first photo detector measures at least one mode of the TMSS light and wherein a second photo detector measures a local oscillator. A shared local oscillator 66 is provided by the light source to all detectors 20, 22, 24 as a reference for measuring the at least one mode of the TMSS light. The local oscillator is transmitted to the receiver client 14, especially to the first receiver-sided detector 22 and the second receiver-sided detector 24, via the local oscillator channel 30. To synchronize the measurement of the second TMSS light through the second quantum channel 28 and of the local oscillator 66 an oscillator fiber delay 68 is provided in the local oscillator channel 30. The oscillator fiber delay 68 is preferably switchable between an on and off status by a delay switch 61.

Each client 12, 14 has its own control unit 70 to process and/or transfer the measured data, results and encoded/decoded information.

## Claims

1. System (10) for a two-step quantum secure direct communication, the system (10) comprising:
- a transmitter client (12) to transmit an information,
- a receiver client (14) to receive the information transmitted by the transmitter client (12),
- at least one communication path (16) between the transmitter client (12) and the receiver client (14) to direct the information, and
- a light source (34) to emit two single-mode squeezed state lights;
the transmitter client (12) comprising:
- a modulator arrangement (44) to create at least two modes of a two-mode squeezed state light from the two single-mode squeezed state lights, and
- at least one transmitter-sided detector (20) to measure at least one mode of the two-mode squeezed state light,
the receiver client (14) comprising:
- at least one receiver-sided detector (22, 24) to measure at least one mode of the two-mode squeezed state light,
wherein the modulator arrangement (44) and/or at least one of the detectors (20, 22, 24) is embedded in a photonic integrated circuit (38).

2. System (10) according to claim 1, wherein the modulator arrangement (44) and the transmitter-sided detector (20) are embedded in a shared photonic integrated circuit (38).

3. System (10) according to claim 1 or 2, wherein the modulator arrangement (44) and/or at least one of the detectors (20, 22, 24) comprising:
- at least two waveguides (40, 42) each to direct at least one of the two single-mode and/or two-mode squeezed state lights, wherein the waveguides (40, 42) are separated in a modulation section (62) of the waveguides (40, 42), and
- at least one pair of electro-optical modulators (60) to modulate at least one parameter of the single-mode or two-mode squeezed state lights, wherein each modulator (60) is arranged at one of the modulation sections (62) of the waveguides (40, 42) .

4. System (10) according to claim 1, 2 or 3, wherein the modulator arrangement (44) is configured as an interferometer, preferably a Mach-Zehnder interferometer.

5. System (10) according to any of the preceding claims, wherein the modulator arrangement (44) further comprising:
- at least one beam splitter (46) to separate and/or combine the two single-mode squeezed state lights.

6. System (10) according to any of the preceding claims, wherein the modulator arrangement (44) is preceded by a phase shifter (56) to shift a phase of one of the single-mode squeezed state lights.

7. System (10) according to any of the preceding claims, wherein at least one of the detectors (20, 22, 24) comprises at least one photo detector.

8. System (10) according to any of the preceding claims, wherein the modulator arrangement (44) is followed by an encoder (54) to encode the information in the squeezing phase between two-modes of the two-mode squeezed state lights.

9. System (10) according to any of the preceding claims, wherein a mode switch (48) switchable between a control mode and a operation mode is provided, wherein in the control mode at least one of the modes of the two-mode squeezed state light is directed to the transmitter-sided detector, and wherein in the operation mode at least two modes of two-mode squeezed state light are directed to the at least one receiver-sided detector (22, 24).

10. System (10) according to any of the preceding claims, wherein at least one of the detectors (20, 22, 24) is configured as a homodyne detector, preferably a balanced homodyne detector, or a heterodyne detector.

11. System (10) according to any of the preceding claims, wherein the receiver client (14) comprises two separate detectors (22, 24).

12. System (10) according to any of the preceding claims, wherein a shared local oscillator (66) is provided by the light source (34) to at least two detectors (20, 22, 24) as a reference.

13. System (10) according to any of the preceding claims, wherein the communication path (16) comprises a first quantum channel (26) to direct test information and/or a second quantum channel (28) to direct secure information and/or local oscillator channel (30) to direct the local oscillator, preferably in a single fiber or in a single fiber bundle.

14. System (10) according to any of the preceding claims, wherein at least one switchable fiber delay (58, 59, 68) is provided in the communication path (16), preferably in the first quantum channel (26) and/or the second quantum channel (28) and/or local oscillator channel (30), and/or in at least one of the waveguides (40, 42) to realize an asynchronously detection of the two single-mode squeezed state lights.

15. Method for a two-step quantum secure direct communication between a transmitter client (12) and a receiver client (14), the method comprising the following steps:
- Sharing an agreement between both clients (12, 14), the agreement defining how information is mapped to a squeezed state,
- Generating at least two modes of a two-mode squeezed state light by the transmitter client (12),
- Checking the security of the communication in a control mode, the control mode comprising the following steps:
o Directing at least one first mode of the two-mode squeezed state light to the receiver client (14) and at least one second mode of the two-mode squeezed state light to the transmitter client (12),
o Measuring the at least one second mode by a transmitter-sided detector (20), by a measurement sequence,
o Sending the measurement sequence and corresponding results from the transmitter client (12) to the receiver client (14),
o Measuring the at least one first mode by a first receiver-sided detector (22, 24) with the measurement sequence sent by the transmitter client (12),
o Comparing the measurement results of both clients (12, 14) with each other,
o Determining the security of the communication in dependences on the comparison of the measurement results,
- Switching to operation mode, if the comparison of the measurement results indicates a secure communication, the operation mode comprising the following steps:
o Encoding the information in the at least one second mode by the transmitter client (12),
o Directing the at least one first mode and the at least one second mode to the receiver client (14),
o Measuring the at least one first mode by the first receiver-sided detector (22) and the at least one second mode by a second receiver-sided detector (24) to decode the information.

16. Method according to claim 15, wherein the measurement of the modes of the two-mode squeezed state light comprises a homodyne measurement, wherein preferably a local oscillator (66) is shared with both clients (12, 14) .

17. Method according to claims 15 or 16, wherein the operation mode further the following steps:
- Sharing a fraction of the encoded information by the transmitter client (12) with the receiver client (14),
- Comparing the fraction of the encoded information with the decoded information to determine the error rate and/or security of the communication.

18. Method according to claims 15, 16 or 17, wherein the directing of the first mode and/or the second mode is delayed to provide an asynchronous measurement in control mode and/or to provide a synchronous measurement in operation mode.
